# EUROPEAN PATENT APPLICATION

(11) **EP 2 886 848 A1**
(43) Date of publication of application: **24.06.2015**
(21) Application number: 13306845.2
(22) Date of filing: 23.12.2013
(51) Int. Cl.: F02N 15/02, F16D 41/064

(54) **Torque transmission mechanism**

(71) Applicant: Aktiebolaget SKF, 41 550 Göteborg (SE)
(72) Inventor: Chambonneau, M Charles, 37300 JOUE LES TOURS (FR); Berruet, Nicolas, 37260 Artannes sur Indre (FR); Champalou, François, 41150 CHAUMONT SUR LOIRE (FR); Ribault, Patrice, 37210 VOUVRAY (FR); Liverato, Yves-André, 37370 St PATERNE RACAN (FR); Corbett, Richard, 37230 FONDETTES (FR)
(74) Representative: Myon, Gérard Jean-Pierre

(57) **Abstract**

This torque transmission mechanism (A), for a starter for an internal combustion engine, is adapted to transmit a starting torque from a starter motor to a crankshaft (4). The torque transmission mechanism (A) comprises a ring gear (2) that transmits the starting torque and a one-way clutch (8) disposed between the ring gear (2) and the crankshaft (4), this ring gear (2) comprising a gear side portion (22) to which the starting torque is transmitted from the starter motor via gear mesh, and a flange (24) extending between the gear side portion (22) and an inner ring (82) of the one-way clutch (8). The flange (24) comprises an inner section (240) which forms the inner ring (82) of the one-way clutch (8) and an outer section (242) fixed to the inner section (240) and on which the gear side portion (22) is fixed. The inner and outer sections (240, 242) of the flange (24) are fixed together by a mechanical assembly other than welding.

## Description

The invention relates to a torque transmission mechanism for a starter for an internal combustion engine.

Torque transmission mechanisms for starter motors of internal combustion engines generally comprise a ring gear to which a starting torque is transmitted by a starter motor, and which transmits a torque to a one-way clutch of the torque transmission mechanism.

It is known, for example from WO-A-2007/148228, to provide a ring gear divided, along a radial direction, in three regions including a gear side region, an intermediate region and a race side region. The gear side region meshes with a pinion of the starter motor, while the race side region transmits torque to the one-way clutch.

The three regions are generally welded together using, for example, laser welding or electro beam welding. Such techniques are expensive and complex to implement. Moreover, these techniques need metallic materials of specific properties to be present on the areas which are to be welded. This implies complex manufacturing operations and is also not standard for SKF channel.

The welding process generates a dimensional modification and in consequence no control of bearing clearance.

The aim of the invention is to provide a new torque transmission mechanism in which the ring gear has a structure which makes the ring gear easier to assemble.

To this end, the invention concerns a torque transmission mechanism for a starter, for an internal combustion engine, adapted to transmit a starting torque from a starter motor to a crankshaft, the torque transmission mechanism comprising a ring gear that transmits the starting torque and a one-way clutch disposed between the ring gear and the crankshaft, this ring gear comprising a gear side portion, to which the starting torque is transmitted from the starter motor via gear mesh, and a flange extending between the gear side portion and an inner ring of the one-way clutch, the flange comprising an inner section which forms the inner ring of the one-way clutch and an outer section fixed to the inner section and on which the gear side portion is fixed. This torque transmission mechanism is characterized in that the inner and outer sections of the flange are fixed together by a mechanical assembly other than welding..

Thanks to the invention, the inner section and the outer section of the flange are fixed to each other using simple mechanical fastening means, which avoid the use of complex manufacturing processes for realizing the inner and outer sections of the flange.

According to further aspects of the invention which are advantageous but not compulsory, such a torque transmission mechanism may incorporate one or several of the following features:
- The inner and outer sections of the flange are fixed together by clamping, riveting, clinching, brazing gluing, deformation or castellated type shapes.
- The inner section of the flange comprise a radially extending edge adapted to cooperate with an inner radial edge of the outer section of the flange, whereas the respective edges of the inner and outer sections of the flange comprise aligned through holes for receiving rivets.
- The torque transmission mechanism comprises a clamping ring for clamping the outer section of the flange between the inner section of the flange and the clamping ring.
- The inner section comprises protruding members adapted to be inserted in holes of the outer section and deformed laterally around said holes.
- Both the inner and outer sections of the flange are stamped and turned parts.
- The outer section of the flange is made of DC04 steel.
- The inner section of the flange is made of C67 steel.
- The torque transmission mechanism comprises a bearing for allowing relative rotation between the crankshaft and the one-way clutch, said bearing comprising a inner ring coupled in rotation to the crankshaft, and an outer ring coupled in rotation to the inner ring of the one-way clutch, whereas a portion of the inner section of the flange which forms the inner ring of the one-way clutch is fixed to the outer ring of the bearing.
- The outer ring of the bearing is blocked in translation along the rotation axis of the torque transmission mechanism with respect to the inner ring of the one-way clutch by a shoulder of the inner section of the flange.
- The outer ring of the bearing is fixed to the inner section of the flange by caulking.
- The outer ring of the bearing is fixed to the inner section of the flange by press fit.
- The portion of the inner section of the flange which forms the inner ring of the one-way clutch comprises a surface which comes into contact with sprags of the one-way clutch and which is hardened by induction.

The invention will now be explained in correspondence with the annexed figures, as an illustrative example. In the annexed figures:
- figure 1 is a sectional view of an upper half of a torque transmission mechanism according to a first embodiment of the invention,
- figure 2 is a view at a larger scale of detail II on figure 1,
- figure 3 is a view at a larger scale of detail III on figure 1,
- figure 4 is a view similar to figure 1, of a torque transmission mechanism according to a second embodiment of the invention,
- figure 5 is a view at a larger scale of detail V on figure 4;
- figure 6 is a view at a larger scale of detail VI on figure 4 ;
- figure 7 is a perspective view of portion of a ring gear belonging to a torque transmission mechanism according to a third embodiment of the invention, the ring gear being in a non assembled configuration ;
- figure 8 is a view similar to figure 7, the ring gear being in an assembled configuration.

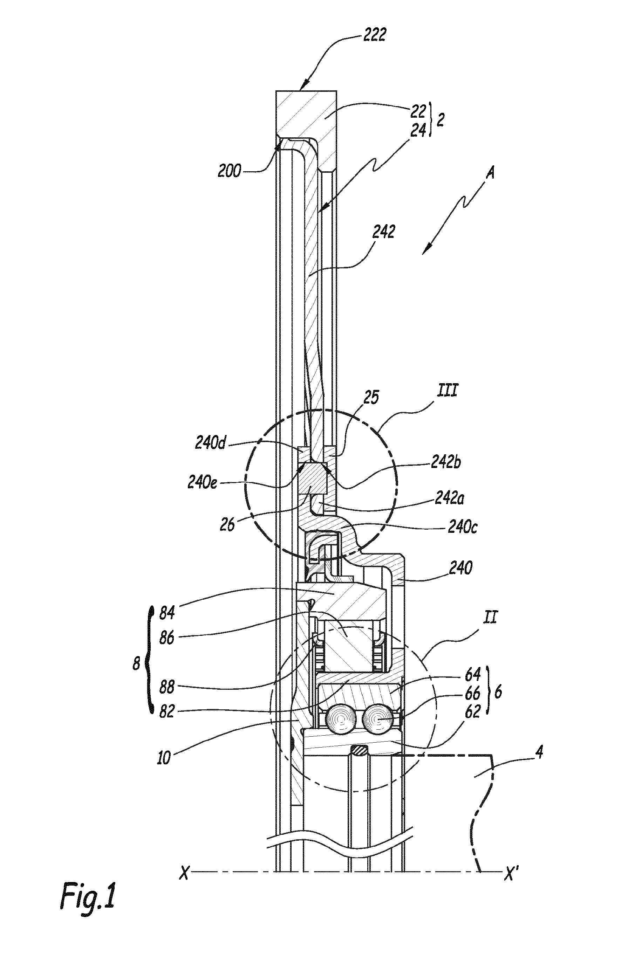

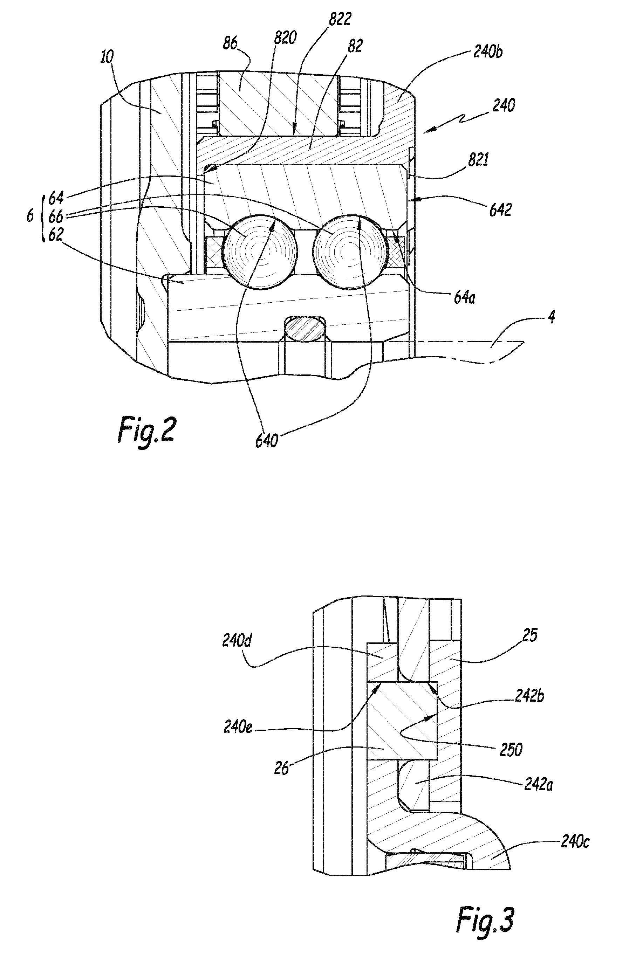

The torque transmission mechanism A represented on figures 1 to 3 comprises a ring gear 2 which is driven by a non-shown pinion of a non-shown starter motor. Ring gear 2 is rotatable with respect to a crankshaft 4 of a non-shown internal combustion engine along a rotation axis X-X' of torque transmission mechanism A. For the sake of simplicity and clarity, crankshaft 4 is shown on figures 1 and 2, in dashed lines.

In this description, the terms « axial », « radial », « axially », « radially » refer to axis X-X'. A direction is axial when it is parallel to axis X-X', and radial when it is perpendicular to axis X-X' and secant with this axis. A surface is axial when it is perpendicular to axis X-X', and radial when this surface belongs to a cylinder that surrounds axis X-X' at a constant radial distance.

Rotation of ring gear 2 with respect to crankshaft 4 is allowed by a rolling bearing 6 including an inner ring 62, coupled in rotation to crankshaft 4, and an outer ring 64. The outer ring 64 includes two raceway tracks 640 realized on an inner radial surface 64a of outer ring 64. Rolling bearing 6 also includes rolling elements, such as balls 66, located between inner ring 62 and outer ring 64. Outer ring 64 is coupled in rotation to ring bear 2.

Torque transmission mechanism A also comprises a one-way clutch 8, which includes an inner ring 82 formed by a portion of ring gear 2, an outer ring 84 and sprags 86 mounted in a cage 88 located between inner ring 82 and outer ring 84.

Outer ring 84 is coupled in rotation with crankshaft 4 thanks to a front plate 10. According to a non-shown variant, front plate 10 and outer ring 84 may be formed by a single part.

Ring gear 2 comprises a gear side portion 22 which is made of a metallic material and to which a starting torque is transmitted from the starter motor via gear mesh. Gear side portion 22 has the shape of a ring including an annular circular edge 220 and gear teeth 222 on its outer edge.

Ring gear 2 also includes a flange 24 which extends between gear side portion 22 and inner ring 82 of one-way clutch 8. Flange 24 is divided into a radial inner section 240 which forms inner ring 84 of one-way clutch 8, and a radial outer section 242, fixed to inner section 240 and on which gear side portion 22 is fixed.

Outer ring 64 of bearing 6 is coupled in rotation to inner ring 82 of one-way clutch 8. The portion of inner section 240 which forms inner ring 82 is fixed to outer ring 64. Inner ring 82 comprises a radially inwardly extending shoulder 820 located on the opposite side of inner ring 82 with respect to radial portion 240b. Shoulder 820 blocks, in translation along axis X-X', outer ring 64 with respect to inner ring 82. On the other side of outer ring 64 along axis X-X', inner ring 82 is fixed to outer ring 64 by caulking. In other words, portions 821 of metallic material of inner ring 82 are deformed to be engaged against a lateral axial surface 642 of outer ring 64, as shown on figure 2.

The portion of inner section 240 which forms inner ring 82 of one-way clutch 8 comprises an outer surface 822 which comes into contact with sprags 86. According to an optional aspect of the invention, surface 822 is hardened by induction.

In the plane of figure 1, inner section 240 has a substantially U shaped section which comprises a portion centred on axis X-X' which forms the inner ring 82 of one-way clutch 8, an intermediate radial portion 240b and a portion 240c which radially faces inner ring 82 and which comprises an edge 240d extending radially outwards towards gear side portion 22.

Outer section 242 has substantially the shape of an annular plate and comprises an inner radial edge 242a adapted to cooperate with edge 240d.

Inner and outer sections 240 and 242 are fixed together by a mechanical assembly other than welding. This permits to use standard metallic parts, to avoid complex manufacturing process and to better control the clearance of bearing 6.

In the shown embodiment, edges 240d and 242a are superimposed along axis X-X' and comprise aligned circular through holes 242b and 240e adapted to receive cylindrical rivets 26 for fixing inner and outer sections 240 and 242 to each other by clamping.

As represented on figures 1 and 3, inner edge 242a of outer section 242 is clamped between outer edge 240d of inner section 240 and a clamping ring 25 which has substantially the same shape as outer edge 240d. Rivets 26 pass through holes 242b and 240e and are fixed to clamping ring 25. Rivets 26 can protrude from inner edge 242a into some blind holes 250 of clamping ring 25.

Thanks to the use of rivets 26, the inner and outer sections 240 and 242 of the flange 24 do not need to be welded and can therefore be made from specific carbon enriched metallic materials. Moreover, inner and outer sections 240 and 242 can be manufactured by stamping and turning. Ring gear 2 is therefore less costly to manufacture than the ring gears of the prior art.

Preferably, outer section 242 is made from a metallic material such as DC04 steel.

Preferably, inner section 240 is made from a metallic material such as C67 steel.

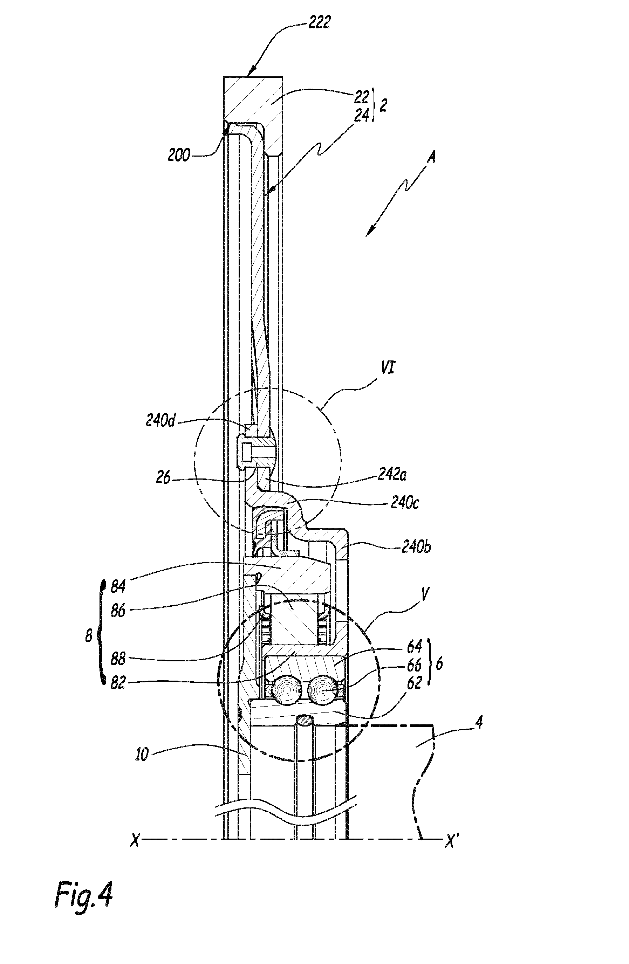

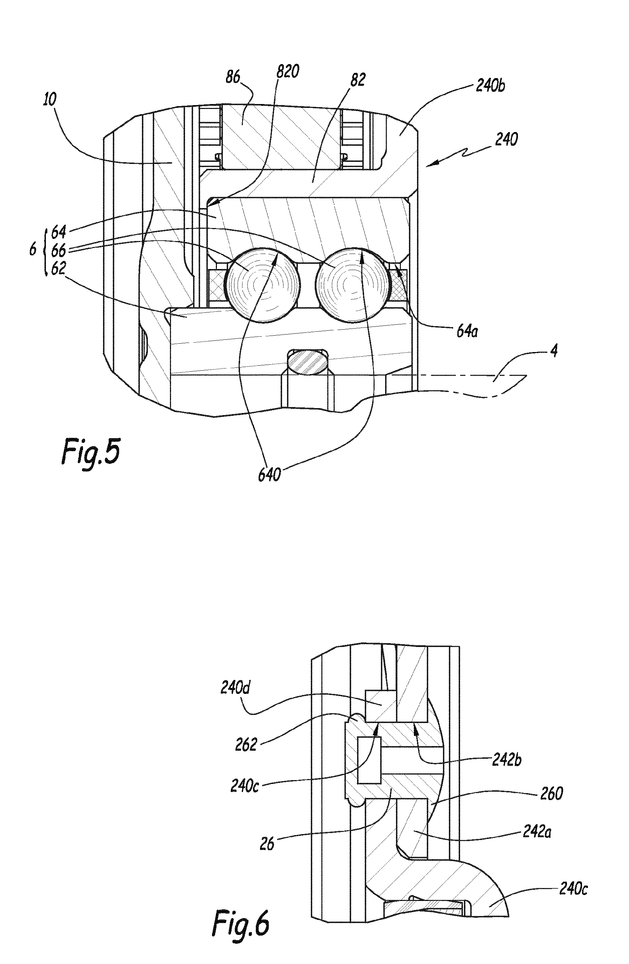

A second and a third embodiments of the invention are represented on figures 4, 5 6, 7 and 8. In these embodiment, elements similar to the first embodiment have the same references and work in the same way. Only the differences from the first embodiment are detailed here-after.

In the embodiment of figures 4 to 6, outer section 242 and inner section 240 are fixed to each other by riveting. In such a case, torque transmission mechanism A does not comprise a clamping ring 25 but rivets 26 having a head 260 which abuts against a surface of inner edge 242a, and an opposite end 262 which is deformed radially so as to protrude radially around the edges of holes 240e.

According to a variant represented only on figures 4 and 5, but which can be combined with the embodiment of figures 1 to 3, inner ring 82 of one-way clutch 8 may be fixed to outer ring 64 of bearing 6 by press fit.

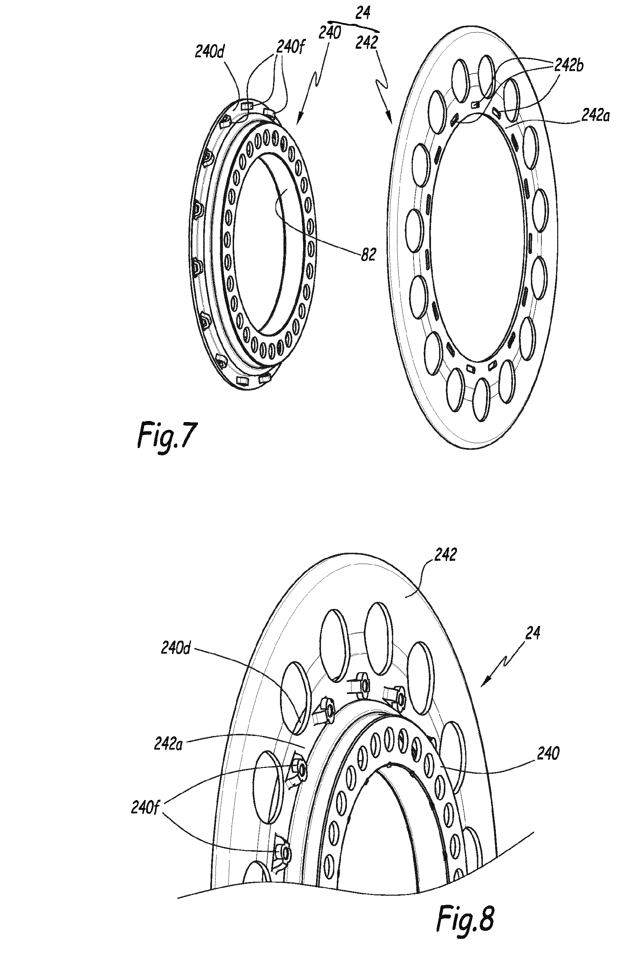

On the embodiment of figures 7 and 8, inner section 240 comprises axially extending protruding members 240f, distributed along the circumference of outer edge 240d. In the non-assembled configuration of figure 7, protruding members 24f are adapted to be inserted axially into corresponding holes 242b of inner edge 242a.

In order to fasten outer section 242 to inner section 240, protruding members 240f are pressed and deformed against inner edge 242a, for example by a punch-an-die device, so that protruding members 240f expand laterally around holes 242b. Once deformed as represented on figure 8, protruding members 240f extend on both sides of inner edge 242a.

According to a non-shown embodiment of the invention, inner and outer sections 240 and 242 can be fixed to each other by clinching, brazing, gluing, deformations to obtain corresponding protrusions and recesses, or realizing corresponding castellated shapes.

The features of the previous described variants and embodiments can be combined to obtain new embodiments of the invention.

## Claims

1. Torque transmission mechanism (A) for a starter for an internal combustion engine, adapted to transmit a starting torque from a starter motor to a crankshaft (4), the torque transmission mechanism (A) comprising a ring gear (2) that transmits the starting torque and a one-way clutch (8) disposed between the ring gear (2) and the crankshaft (4), said ring gear (2) comprising a gear side portion (22), to which the starting torque is transmitted from the starter motor via gear mesh, and a flange (24) extending between the gear side portion (22) and an inner ring (82) of the one-way clutch (8), the flange (24) comprising an inner section (240) which forms the inner ring (82) of the one-way clutch (8) and an outer section (242) fixed to the inner section (240) and on which the gear side portion (22) is fixed, wherein the inner and outer sections (240, 242) of the flange (24) are fixed together by a mechanical assembly other than welding.

2. Torque transmission mechanism according to claim 1, wherein the inner and outer sections (240, 242) of the flange (24) are fixed together by clamping (25, 26), riveting (26), clinching, brazing, gluing, deformation, castellated type shapes.

3. Torque transmission mechanism according to claim 2, wherein the inner section (240) of the flange (24) comprise a radially extending edge (240d) adapted to cooperate with an inner radial edge (242a) of the outer section (242) of the flange (24), and wherein the respective edges (240e, 242a) of the inner (240) and outer (242) sections of the flange (24) comprise aligned through holes (240e, 242b) for receiving rivets (26).

4. Torque transmission mechanism according to claim 3, wherein it comprises a clamping ring (25) for clamping the outer section (242) of the flange (24) between the inner section (240) of the flange (24) and the clamping ring (25).

5. Torque transmission mechanism according to claim 2, wherein the inner section (240) comprises protruding members (240f) adapted to be inserted in holes (242b) of the outer section (242) and deformed laterally around said holes (242b).

6. Torque transmission mechanism according to any preceding claim, wherein both the inner (240) and outer sections (242) of the flange (24) are stamped and turned parts.

7. Torque transmission mechanism according to any preceding claim, wherein the outer section (242) of the flange (24) is made of DC04 steel.

8. Torque transmission mechanism according to any preceding claim, wherein the inner section (240) of the flange (242) is made of C67 steel.

9. Torque transmission mechanism according to any preceding claim, wherein it comprises a bearing (6) for allowing relative rotation between the crankshaft (4) and the one-way clutch (8), said bearing (6) comprising a inner ring (62) coupled in rotation to the crankshaft (4), and an outer ring (64) coupled in rotation to the inner ring (82) of the one-way clutch (8), and wherein a portion of the inner section (240) of the flange (24) which forms the inner ring (82) of the one-way clutch (8) is fixed to the outer ring (64) of the bearing (6).

10. Torque transmission mechanism according to claim 9, wherein the outer ring (64) of the bearing (6) is blocked in translation along the rotation axis (X-X') of the torque transmission mechanism (A) with respect to the inner ring (82) of the one-way clutch (8) by a shoulder (820) of the inner section (240) of the flange (24).

11. Torque transmission mechanism according to claim 10, wherein the outer ring (64) of the bearing (6) is fixed to the inner section (240) of the flange (24) by caulking.

12. Torque transmission mechanism according to claim 10, wherein the outer ring (64) of the bearing (6) is fixed to the inner section (240) of the flange (24) by press fit.

13. Torque transmission mechanism according to any preceding claim, wherein the portion of the inner section (240) of the flange (24) which forms the inner ring (82) of the one-way clutch (8) comprises a surface (822) which comes into contact with sprags (86) of the one-way clutch (8) and which is hardened by induction.
